# EUROPEAN PATENT SPECIFICATION

(11) **EP 1 979 515 B1**
(45) Date of publication and mention of the grant of the patent: **11.08.2010**
(21) Application number: 07702989.0
(22) Date of filing: 15.01.2007
(51) Int. Cl.: D01F 6/04, B29C 43/00, B29C 55/00

(54) **ENDLESS SHAPED ARTICLE OF ULTRA-HIGH MOLECULAR WEIGHT POLYLEFIN FILAMENTS AND/OR STAPLE FIBRES AND A PROCESS FOR MAKING THE SAME**
ENDLOSER FORMKÖRPER AUS FILAMENTEN UND/ODER STAPELFASERN, DIE AUS ULTRAHOCHMOLEKULAREM POLYOLEFIN BESTEHEN, UND VERFAHREN ZU SEINER HERSTELLUNG
ARTICLE DE FORME SANS FIN FABRIQUÉ À PARTIR DE FILAMENTS ET/OU DE FIBRES DISCONTINUES DE POLYOLÉFINE DE MASSE MOLÉCULAIRE ULTRA-ÉLEVÉE ET PROCÉDÉ DE FABRICATION DUDIT ARTICLE

(30) Priority: 26.01.2006 EP 06075292
(43) Date of publication of application: 15.10.2008
(60) Divisional application: 10151207.7
(73) Proprietor: DSM IP Assets B.V., 6411 TE Heerlen (NL)
(72) Inventor: MARISSEN, Roelof, NL-6121 HS Born (NL); OOSTEROM, Rogier, NL-6221 JB Maastricht (NL); THEUNISSEN, Willibrordus, Maria, Egidius, NL-6351 AG Bocholtz (NL)
(74) Representative: Steffanie, Leonardus Gerardus
(86) International application number: PCT/EP2007/000582
(87) International publication number: WO 2007/085429

(56) References cited:
- WO-A-2004/053212
- GB-A- 2 253 420
- US-A- 4 876 774
- US-A- 5 456 722
- US-A- 5 540 990
- US-A- 6 148 597
- US-B1- 6 277 773

## Description

The invention relates to an endless shaped article.

Endless shaped articles are generally known and include for example rings, loops and roundslings.

Rings are for example produced from a metal, like for instance aluminum and steel, or may also be moulded from a plastic, for instance nylon. Loops and roundslings are often produced from fibres.

In many occasions endless shaped articles are used as connecting elements. For example it is possible to use a ring as a connecting element for two or more rope ends, by attaching the rope ends to the ring. In case of a loop or a roundsling it is for example possible to make a connection between two objects by attaching the loop or the roundsling to both objects, for example by knotting or by winding the loop around the object.

Endless shaped articles are in many instances used to transfer forces, or must be able to withstand forces. It is very important that the articles are very well capable of doing so under all kind of conditions, often for a long time, without breaking or being damaged in any way.

Object of the invention is to provide an endless shaped article that is very well capable of transferring forces.

Surprisingly a very suitable endless shaped article is obtained, if the shaped article comprises at least partly fused ultra-high molecular weight polyolefin filaments and/or staple fibres.

Fusion of filaments of ultra-high molecular weight polyolefin is known as such for a long time and for instance described in US-6,277,773, WO 2004/053212, US-6,148,597 and US-4,876,774. However these documents are not related to endless shaped articles, but to articles like fishing lines, rods, bars and fabrics. The documents give no hint to arrive at the endless shaped articles of the present invention.

The endless shaped articles according to the invention are versatile and for that reason suitable for many applications. It may for example be produced with various diameters and thicknesses, with a low degree of fusion or a high degree of fusion of the filaments and/or staple fibres etc, to tailor the article for its intended use.

In case of partly fused filaments and/or staple fibres, the structure of the filaments and the staple fibres is still partly present in the endless shaped article according to the invention, since the filaments and staple fibres are only fused together with a part of their surface. In case of a low degree of fusion it is even still possible to disconnect the filaments and staple fibres, by simply bending the endless shaped article, or by splitting the partly fused filaments and/or staple fibres in the endless shaped object by applying a splitting force, for example with a knife. In case of increasing degree of fusion the percentage of the surface of a filament or a staple fibre that is fused with another filament or staple fibre increases and finally the filaments and/or staple fibres are fused along all of their surface and the structure of the filaments and/or staple fibres in the endless shaped article according to the invention as such has almost or totally disappeared. With increasing degree of fusion the density of the endless shaped article according to the invention increases. Preferably the density of the endless shaped article is at least 70% of the maximum obtainable density, more preferably at least 80%, even more preferably at least 90%, even more preferably at least 95%, even more preferably at least 98%, even more preferably at least 99%, even more preferably at least 99.5%, most preferably at least 99.9%. The maximum obtainable density is the density of the material used to produce of the endless shaped article, which means the density of the polymeric material of the filamenst and/or staple fibres, if the article consists of the filaments and/or staple fibres, or the density calculated from fractions and densities of different materials, if the article comprises the filaments and/or staple fibres and also one or more other materials.

Preferably the shaped articles according to the invention comprise at least 90% by weight of the ultra-high molecular weight polyolefin filaments and/or staple fibres, more preferably at least 95% by weight, even more preferably at least 98% by weight, even more preferably at least 99% by weight, even more preferably at least 99.9% by weight. Most preferably the endless shaper article consists of at least partly fused filaments and/or staple fibres.

The circumference of the endless shaped article is for example between 10 mm and 10000 mm. Preferably the circumference is at least 20 mm, more preferably at least 30 mm. Preferably the circumference is at most 5000 mm, more preferably at most 1000 mm. The thickness of the endless shaped article, as measured in the body of the at least partly fused filaments and/or staple fibres, is for example between 0.1 mm and 30 mm. Preferably the thickness is at least 0.2 mm, more preferably at least 0.5 mm, even more preferably at least 0.5 mm. Preferably the thickness is at most 20 mm, more preferably at most 10 mm.

In one preferred embodiment the thickness is below 3 mm, more preferably below 2 mm, even more preferably below 1.5 mm, so that the endless shaped article is rather flexible and may be used as a graft attachment device.

In one other preferred embodiment the thickness is at least 10 mm, more preferably at least 15 mm, even more preferably at least 20 mm, so that the article is very suitable for lifting heavy loads, for example as a roundsling or as the core of a roundsling, this roundsling comprising a core and a cover to protect the core.

In the production of the endless shaped article according to the invention as the starting material ultra-high molecular weight polyolefin filaments and/or staple fibres are used. These filaments and/or staple fibres are known to the skilled person. The filaments have an elongate body whose length dimension is greater than the transverse dimensions of width and thickness. It is preferred for the filaments to have a tensile strength of at least 1.2 GPa and a tensile modulus of at least 40 GPa. Staple fibres may be produced from the filaments by methods known to the skilled person.

Homopolymers and copolymers of polyethylene and polypropylene are particularly suitable as polyolefins for the production of the ultra-high molecular weight polyolefin filaments and/or fibres. Furthermore, the polyolefins used may contain small amounts of one or more other polymers, in particular other alkene-1-polymers.

It is preferred for ultra-high molecular weight polyolefin filaments and/or staple fibres used for the production of the endless shaped article according to the invention to be of high-molecular weight linear polyethylene, having a weight average molecular weight of at least 400,000 g/mol.

Linear polyethylene here mea ns polyethylene having less than 1 side chain per 100 C atoms, preferably less than 1 side chain per 300 C atoms.

Preferably, use is made of polyethylene filaments prepared by a gel spinning process as described in for example GB-A-2042414, GB-A-2051667, EP 0205960 A and WO 01/73173 A1. This process essentially comprises the preparation of a solution of a polyolefin of high intrinsic viscosity, spinning the solution to filaments at a temperature above the dissolving temperature, cooling down the filaments below the gelling temperature so that gelling occurs and drawing the filaments before, during or after removal of the solvent.

The shape of the cross-section of the filaments may be selected here through selection of the shape of the spinning aperture.

Preferably use is made of a multifilament yarn. More preferably, use is made of multifilament yarns of ultrahigh molecular weight linear polyethylene with an intrinsic viscosity of at least 5 dl/g, determined in decalin at 135°C, and a yarn titre of at least 50 denier, with the yarn having a tensile strength of at least 25, more preferably at least 30, even more preferably at least 32, even more preferably at least 34 cN/dtex and a tensile modulus of at least 1000 cN/dtex.

The intrinsic viscosity is determined according to PTC-179 (Hercules Inc. Rev. Apr. 29, 1982) at 135°C, the dissolution time being 16 hours, the anti-oxidant is DPBC, in an amount of 2 g/l solution, and the viscosity is measured at different and is extrapolated to zero concentration.

Preferably as the starting material for the endless shaped article of the invention solely the filaments are used.

The invention also relates to a process for producing the endless shaped article according to the invention by winding a filament or one or more yarns containing the filaments and/or staple fibres of the ultra-high molecular weight polyolefin around a pair of wheels to form a loop, heating the fibres to a temperature below the melting point of the filaments and or staple fibres at which the filamenst and/or staple fibres at least partly fuse and stretching the loop by increasing the distance between the wheels, while rotating the wheels.

Preferably each of the wheels comprises a groove to receive the filament or one or more yarns. In this way the filament or one or more yarns are guided over the wheels. Best results are obtained if both axis of the wheels are in the same direction and the wheels and the loop are in the same plane.

In case of ultra-high molecular weight polyethylene filaments and/or staple fibres, the temperature of the filaments and/or fibres may be between 145 and 160 °C. In order to obtain a high degree of fusion of the filaments and/or staple fibres, without running the risk of melting and loss of properties of the filaments and/or staple fibres, the temperature preferably is chosen between 148 and 157 °C, most preferably between 150 and 154 °C.

Because the distance between the wheels is increased the filament or the one or more yarns are drawn. Preferably the drawing ratio of the filament or the one or more yarns is at least 1.2, more preferable at least 1.4, most preferably at least 1.6. Preferably the drawing ratio of the filament or the one or more yarns is at most 3.0, more preferably at most 2.5. The drawing ratio is the ratio between the circumference of the shaped article after drawing and the circumference of the loop as wound around the wheels, before drawing.

In one embodiment use is made of partially drawn ultra-high molecular weight polyolefin filaments. In this case it is possible to apply a high draw ratio in the production process for the endless shaped article, for example of at least 3.0, preferably at least 4.0, to obtain a high strength, high modulus, but also a high degree of fusion of the filaments.

Preferably the distance between the wheels is increased by applying a force at at least one of the wheels. Transportation velocity of the filament or the one or more yarns over the wheels may be between 5 mm per second for endless shaped articles having a circumference of 10 mm, to 1000 mm per second for endless shaped articles having a circumference of at least 10000 mm.

The drawing of the filament or the one or more yarns may take place during a period of between 1 and 10 minutes, preferably between 2 and 4 minutes.

The degree of fusion of the filaments and/or staple fibres may be increased for example by increasing the temperature or by increasing the period of drawing and/or the draw ratio.

A further preferred process for the production of the endless shaped article according to the invention comprises the steps of:
- winding a filament or one or more yarns of the ultra-high molecular weight polyolefin around a pin;
- placing the pin in a mold comprising mold halves having recesses to receive the pin and a cavity for the production of the endless shaped article just around the pin;
- heating the filament or one or more yarns;
- closing the mold to form the shaped article in the cavity of the mold.

Applications for the endless shaped article according to the invention include rings, for example as a part of fishing nets, roundslings for lifting heavy loads, or medical devices, for example orthopaedic devices for fracture fixations of bones, sternum closure, graft attachment etc.

In a preferred embodiment the endless shaped article is, or is part of a graft attachment device. A graft attachment device is described in US 6533802 B2. Such graft attachment devices are for example used in the repair of the anterior cruciate ligament in the knee joint. The procedure often used is to fix one end of the graft in the femur close to the knee joint, often in a drilled bone tunnel, and the other end of the graft in the tibia close to the knee joint, also often in a drilled bone tunnel. Also other ways of fixation of the graft attachment device are used. A problem with the known graft attachment device is that the loop in the device has a moderate stiffness, which slows down or even stops the healing process after the operation.

Surprisingly if the endless shaped article according to the invention is used, a better healing process is obtained. Furthermore the thickness of the loop may be very low, without loosing its strength and stiffness, so that a drilled bone tunnel with a smaller diameter may be used. Moreover because of the relative high bending stiffness of the endless shaped article, compared to the known devices produced out of loose filaments, handling of the graft attachment device is facilitated.

The endless shaped article in this case may have a thickness of between 0.5 and 2.5 mm, preferably between 1 and 2 mm and a circumference between 20 and 200 mm, preferably between 40 and 150 mm.

In another preferred application the endless shaped article according to the invention is an attachment ring in cargo nets, for application in air cargo. In this case the endless shaped article may have a thickness between 4 and 10 mm, and a circumference between 50 and 400 mm.

The invention will further be explained by the figures.
Fig. 1 is a schematic representation of an apparatus for producing an endless shaped article according to the invention comprising two spinning wheels.
Fig. 2 is a cross section of wheels having differently shaped grooves is shown.

In Fig. 3 some possible endless shaped articles according to the invention are shown.

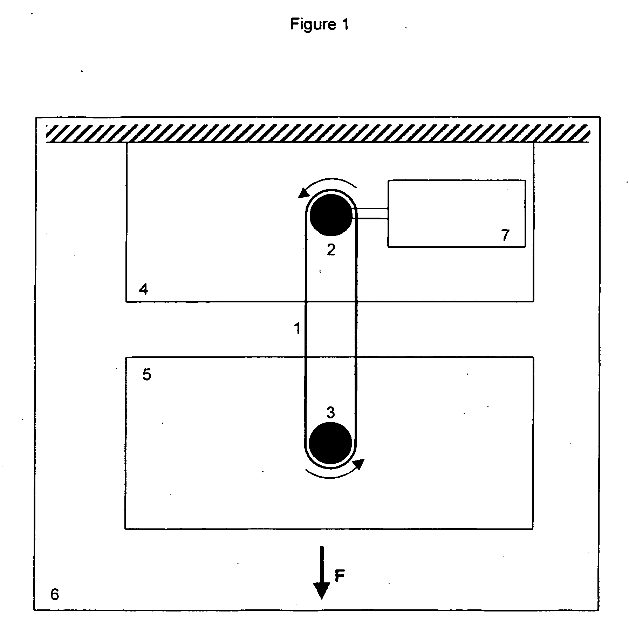

Fig 1 shows a schematic representation of an apparatus for producing an endless shaped article according to the invention comprising the wheels 2 and 3, of which one of the wheels is driven by an electro motor (7). Around the wheels a yarn of ultra-high molecular weight polyethylene (1) is wound with for example 10 winding of Dyneema ™ SK 75 , 1760 dtex, the wheels comprising a groove around their perimeter to receive the fibre. The apparatus is placed in an oven (6), so that it can be operated at a temperature high enough to fuse the filaments in the fibres. The wheel 2 is mounted at a fixed support (4) and the wheel 3 is mounted at a movable support (5), that is drawn with a force F in the indicated direction in the plane of the paper.

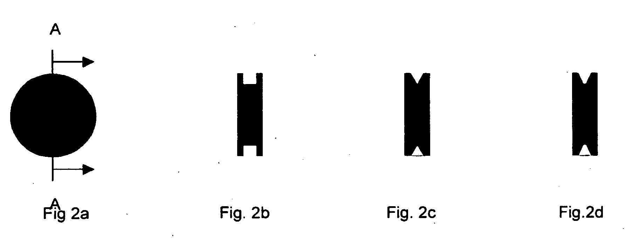

In Fig. 2 a cross section of wheels having differently shaped grooves is shown, the cross section taken along line A-A of Fig 2a. In Fig 2b a wheel suitable for the production of an endless shaped article having a flat or a rectangular shape. In Fig. 2c a wheel comprising a triangular groove, having a sharp angle is shown. With this wheel a fast and high degree of fusion of the filaments and or staple fibres may be obtained. The angle of a similar groove in Fig. 2d is less sharp.

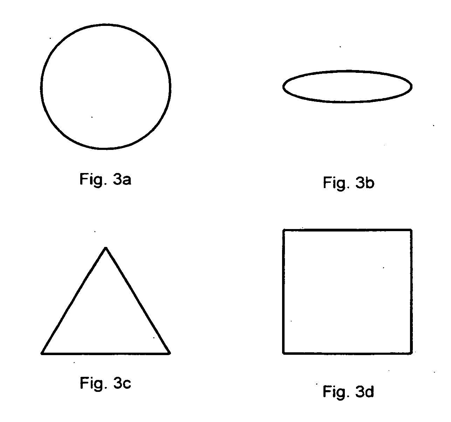

In Fig. 3 some possible endless shaped article according to the invention are shown. In

Fig. 3a a loop is shown and in Fig 3b a ring is shown.

## Claims

1. Endless shaped article, comprising at least partly fused ultra-high molecular weight polyolefin filaments and or staple fibres.

2. Endless shaped article according to claim 1. **characterised in that** the article is a ring or a loop.

3. Endless shaped article according to any one of claims 1 or 2, **characterized in that** the density of the endless shaped article is at least 70% of the maximum obtainable density.

4. Endless shaped article according to any one of claims 1 - 3, **characterized in that** the circumference of the article is between 10 mm and 10000 mm.

5. Endless shaped article according to any one of claims 1 - 4, **characterized in that** the thickness of the article is between 0.1 mm and 30 mm.

6. Endless shaped article according to any one of claims 1 - 5, **characterized in that** the polyolefin is polyethylene.

7. Process for producing the endless shaped article according to any one of claims 1-6 by winding a filament or one or more yarns of the ultra-high molecular weight polyolefin around a pair of wheels to form a loop, heating the filament or the one or more yarns to a temperature below the melting point of the fibres at which the filaments and/or staple fibres at least partly fuse and stretching the loop by increasing the distance between the wheels, while rotating the wheels.

8. Process according to claim 7, **characterized in that** the filament or the one or more yarns are heated to a temperature between 145 and 160 °C.

9. Process according to claim 7, **characterized in that** the drawing ratio of the fibres is at least 1.2.

10. Graft attachment device comprising the endless shaped article according to any one of claims 1 - 6.

## Patentansprüche

1. Endloser Formkörper, umfassend wenigstens teilverschmolzene Filamente und/oder Stapelfasern aus ultrahochmolekularem Polyolefin.

2. Endloser Formkörper nach Anspruch 1, **dadurch gekennzeichnet, daß** es sich dabei um einen Ring oder um eine Schlaufe handelt.

3. Endloser Formkörper nach einem der Ansprüche 1 oder 2, **dadurch gekennzeichnet, daß** die Dichte des endlosen Formkörpers mindestens 70% der maximal erzielbaren Dichte beträgt.

4. Endloser Formkörper nach einem der Ansprüche 1-3, **dadurch gekennzeichnet, daß** der Umfang des Formkörpers zwischen 10 mm und 10000 mm liegt.

5. Endloser Formkörper nach einem der Ansprüche 1-4, **dadurch gekennzeichnet, daß** die Dicke des Formkörpers zwischen 0,1 mm und 30 mm liegt.

6. Endloser Formkörper nach einem der Ansprüche 1-5, **dadurch gekennzeichnet, daß** es sich bei dem Polyolefin um Polyethylen handelt.

7. Verfahren zur Herstellung des endlosen Formkörpers gemäß einem der Ansprüche 1-6, indem man ein Filament oder mindestens ein Garn aus dem ultrahochmolekularen Polyolefin unter Schlaufenbildung um ein Räderpaar wickelt und auf eine unter dem Schmelzpunkt der Fasern liegende Temperatur erhitzt, bei der die Filamente und/oder Stapelfasern wenigstens teilverschmelzen und durch Vergrößerung des Abstands zwischen den sich drehenden Rädern die Schlaufe verstreckt.

8. Verfahren nach Anspruch 7, **dadurch gekennzeichnet, daß** man das Filament oder das mindestens eine Garn auf eine Temperatur zwischen 145 und 160°C erhitzt.

9. Verfahren nach Anspruch 7, **dadurch gekennzeichnet, daß** das Streckverhältnis der Fasern mindestens 1,2 beträgt.

10. Implantatbefestigungsvorrichtung, umfassend den endlosen Formkörper gemäß einem der Ansprüche 1-6.

## Revendications

1. Article de forme sans fin, comprenant des filaments et/ou des fibres discontinues de polyoléfine de masse moléculaire ultra-élevée au moins partiellement fusionnés.

2. Article de forme sans fin selon la revendication 1, **caractérisé en ce que** l'article est un anneau ou une boucle.

3. Article de forme sans fin selon l'une quelconque des revendications 1 ou 2, **caractérisé en ce que** la densité de l'article de forme sans fin est au moins 70 % de la densité maximale qui peut être obtenue.

4. Article de forme sans fin selon l'une quelconque des revendications 1 à 3, **caractérisé en ce que** la circonférence de l'article se situe entre 10 et 10 000 mm.

5. Article de forme sans fin selon l'une quelconque des revendications 1 à 4, **caractérisé en ce que** l'épaisseur de l'article se situe entre 0,1 mm et 30 mm.

6. Article de forme sans fin selon l'une quelconque des revendications 1 à 5, **caractérisé en ce que** la polyoléfine est du polyéthylène.

7. Procédé de production de l'article de forme sans fin selon l'une quelconque des revendications 1 à 6 en enroulant un filament ou un ou plusieurs fils de la polyoléfine à masse moléculaire ultra-élevée autour d'une paire de roues pour former une boucle, en chauffant le filament ou l'un ou plusieurs fils à une température inférieure au point de fusion des fibres auquel les filaments et/ou les fibres discontinues se fusionnent au moins partiellement et en étirant la boucle en augmentant la distance entre les roues tout en faisant tourner les roues.

8. Procédé selon la revendication 7, **caractérisé en ce que** le filament ou l'un ou plusieurs fils sont chauffés à une température entre 145 et 160 °C.

9. Procédé selon la revendication 7, **caractérisé en ce que** le rapport d'étirage des fibres est d'au moins 1,2.

10. Dispositif d'attachement de greffe comprenant l'article de forme sans fin selon l'une quelconque des revendications 1 à 6.
